# EUROPÄISCHE PATENTSCHRIFT

(11) **EP 3 864 312 B1**
(45) Veröffentlichungstag und Bekanntmachung des Hinweises auf die Patenterteilung: **03.05.2023**
(21) Anmeldenummer: 19782470.9
(22) Anmeldetag: 12.09.2019
(51) Int. Cl.: F16D 13/70

(54) **DREHMOMENTÜBERTRAGUNGSEINRICHTUNG**
TORQUE-TRANSMISSION DEVICE
DISPOSITIF DE TRANSMISSION DE COUPLE

(30) Priorität: 08.10.2018 DE 102018124686
(43) Veröffentlichungstag der Anmeldung: 18.08.2021
(73) Patentinhaber: Schaeffler Technologies AG & Co. KG, 91074 Herzogenaurach (DE)
(72) Erfinder: AGNER, Ivo, 77815 Bühl (DE); LITT, Audrey, 67100 Strasbourg (FR); WAGNER, Dominique, 67320 Baerendorf (FR)
(86) Internationale Anmeldenummer: PCT/DE2019/100814
(87) Internationale Veröffentlichungsnummer: WO 2020/074036

(56) Entgegenhaltungen:
- DE-A1-102015 114 278
- DE-A1-102015 200 109

## Beschreibung

Die Erfindung betrifft eine Drehmomentübertragungseinrichtung mit einer Anpressanordnung, die einen Anpresskörper zum Verpressen eines Reibelements zwischen dem Anpresskörper und einem Gegenkörper umfasst, wobei die Anpressanordnung ein bezüglich einer in radialer Richtung durch einen Massenschwerpunkt der Anpressanordnung verlaufenden ersten Radialachse erstes Massenträgheitsmoment und ein bezüglich einer in radialer Richtung durch den Massenschwerpunkt der Anpressanordnung senkrecht zur ersten Radialachse verlaufenden zweiten Radialachse zweites Massenträgheitsmoment aufweist, das von dem ersten Massenträgheitsmoment verschieden ist, um eine anisotrope Massenverteilung der Anpressanordnung darzustellen.

Aus der deutschen Offenlegungsschrift DE 10 2015 200 109 A1 ist eine Anpressplatte zum Verpressen einer Kupplungsscheibe für eine Reibungskupplung mit einem eine Reibfläche zur Anlage an der Kupplungsscheibe ausbildenden Scheibenkörper bekannt, wobei der Scheibenkörper ein bezüglich einer in radialer Richtung durch den Massenschwerpunkt des Scheibenkörpers verlaufenden ersten Radialachse erstes Massenträgheitsmoment und ein bezüglich einer in radialer Richtung durch den Massenschwerpunkt des Scheibenkörpers senkrecht zur ersten Radialachse verlaufenden zweiten Radialachse zweites Massenträgheitsmoment aufweist, wobei das erste Massenträgheitsmoment von dem zweiten Massenträgheitsmoment verschieden ist. Aus der deutschen Offenlegungsschrift DE 10 2015 114 278 A1 ist ein Kupplungsmechanismus bekannt, umfassend drei Komponenten mit Rotationssymmetrie um eine Rotationsachse des Mechanismus, wobei die besagten Komponenten jeweils gebildet sind von einer Platte, von einem Deckel und von einer Membranfeder, die in eingeschobener Weise zwischen der besagten Platte und dem besagten Deckel montiert ist, wobei mindestens eine der besagten Komponenten eine Diskontinuität der Verteilung ihrer flächenbezogenen Masse und/oder ihrer Steifigkeit auf zumindest einer Diametralachse aufweist.

Aufgabe der Erfindung ist es, eine Anpressanordnung gemäß dem Oberbegriff des Anspruchs 1 konstruktiv, fertigungstechnisch und/oder funktionell zu verbessern.

Die Aufgabe ist bei einer Drehmomentübertragungseinrichtung mit einer Anpressanordnung, die einen Anpresskörper zum Verpressen eines Reibelements zwischen dem Anpresskörper und einem Gegenkörper umfasst, wobei die Anpressanordnung ein bezüglich einer in radialer Richtung durch einen Massenschwerpunkt der Anpressanordnung verlaufenden ersten Radialachse erstes Massenträgheitsmoment und ein bezüglich einer in radialer Richtung durch den Massenschwerpunkt der Anpressanordnung senkrecht zur ersten Radialachse verlaufenden zweiten Radialachse zweites Massenträgheitsmoment aufweist, das von dem ersten Massenträgheitsmoment verschieden ist, um eine anisotrope Massenverteilung der Anpressanordnung darzustellen, dadurch gelöst, dass mindestens ein starr mit dem eine im Wesentlichen isotrope Massenverteilung aufweisenden Anpresskörper verbundenes Einzelteil eine anisotrope Massenverteilung aufweist, um die anisotrope Massenverteilung der Anpressanordnung darzustellen. Die Anpressanordnung umfasst insbesondere nur den Anpresskörper und das Einzelteil. Die Anpressanordnung umfasst gegebenenfalls auch Teile jedweder Art, die fest mit dem Anpresskörper verbunden sind. Die Anpressanordnung umfasst vorteilhaft wenigstens ein starr mit dem eine im Wesentlichen isotrope Massenverteilung aufweisenden Anpresskörper verbundenes Einzelteil, das eine anisotrope Massenverteilung aufweist, um die anisotrope Massenverteilung der Anpressanordnung darzustellen. Bei dem Anpresskörper handelt es sich zum Beispiel um eine Anpressplatte einer Trockenkupplung. Bei dem Reibelement handelt es sich zum Beispiel um eine Kupplungsscheibe der Trockenkupplung. Bei dem Anpresskörper kann es sich aber auch um eine Lamelle, zum Beispiel um eine Stahllamelle, einer Nasskupplung handeln. Bei dem Reibelement handelt es sich dann zum Beispiel um eine Reiblamelle der Nasskupplung. Bei dem Reibelement kann es sich aber auch um eine Bremsscheibe einer Bremse handeln. Dann handelt es sich bei dem Anpresskörper und dem Gegenkörper zum Beispiel um Bremsbacken der Bremse. Das Reibelement ist vorteilhaft mit einem Reibbelag versehen. Alternativ oder zusätzlich kann der Anpresskörper auch mit einem Reibbelag versehen sein. Der Anpresskörper der beanspruchten Anpressanordnung hat im Unterschied zu dem aus der deutschen Offenlegungsschrift DE 10 2015 200 109 A1 bekannten Scheibenkörper im Wesentlichen keine anisotrope Massenverteilung. Das liefert unter anderem den Vorteil, dass die Funktionalität des Anpresskörpers, insbesondere der Anpressplatte, nicht verändert beziehungsweise beeinflusst wird. Die Anpressanordnung als solches ist vorteilhaft, ebenso wie der Anpresskörper selbst, ausgewuchtet. Der Massenschwerpunkt der ausgewuchteten Anpressanordnung liegt vorzugsweise im Bereich einer Rotationsachse der Anpressanordnung.

Die oben angegebene Aufgabe ist bei einer Drehmomentübertragungseinrichtung gemäß dem Oberbegriff des Anspruchs 1 alternativ dadurch gelöst, dass genau ein starr mit dem eine im Wesentlichen isotrope Massenverteilung aufweisenden Anpresskörper verbundenes Einzelteil eine anisotrope Massenverteilung aufweist, um die anisotrope Massenverteilung der Anpressanordnung darzustellen. Dadurch werden die Herstellung und die Montage der Drehmomentübertragungseinrichtung vereinfacht. Das Einzelteil ist im Wesentlichen rotationssymmetrisch ausgeführt. Das Einzelteil umfasst vorteilhaft mindestens einen Ringkörper. Bei dem Ringkörper handelt es sich zum Beispiel um einen offenen Ringkörper. Der offene Ringkörper ist zum Beispiel so oder so ähnlich wie ein Sicherungsring ausgeführt, der auch als Nutring oder Sprengring bezeichnet wird. Der Ringkörper kann aber auch geschlossen ausgeführt sein. Der geschlossene Ringkörper besteht zum Beispiel in Umfangsrichtung durchgehend aus einem insbesondere homogenen Material. Der Ringkörper kann einteilig oder mehrteilig ausgeführt sein. So kann der Ringkörper zum Beispiel segmentiert aus einzelnen Einzelteilen zusammengesetzt sein.

Ein bevorzugtes Ausführungsbeispiel der Drehmomentübertragungseinrichtung ist dadurch gekennzeichnet, dass das starr mit dem eine im Wesentlichen isotrope Massenverteilung aufweisenden Anpresskörper verbundene Einzelteil eine Anisotropie von zehn bis fünfundzwanzig Prozent aufweist. Das starr mit dem eine im Wesentlichen isotrope Massenverteilung aufweisenden Anpresskörper verbundene Einzelteil weist besonders bevorzugt eine Anisotropie von fünfzehn bis siebzehn Prozent auf. Im Rahmen der vorliegenden Erfindung wird das Massenträgheitsmoment eines Einzelteils beziehungsweise einer Baugruppe um die radiale Rotationsachse x beziehungsweise y im Massenschwerpunkt dieses Einzelteils beziehungsweise dieser Baugruppe betrachtet. Eine übliche Einheit ist Kilogramm mal Quadratmillimeter. Die Rotationsachsen x beziehungsweise y stehen senkrecht aufeinander und bilden ein Koordinatensystem parallel zu einer Reibfläche der betrachteten Anpressanordnung. Die Nullpunkte der x- und y-Koordinaten liegen im Massenschwerpunkt des Einzelteils beziehungsweise der Baugruppe. Hier ist insbesondere nicht die Rotationsachse der Anpressanordnung gemeint, sondern die im Anspruch genannte erste Radialachse beziehungsweise zweite Radialachse, um die das Einzelteil beziehungsweise die Baugruppe im Betrieb der Anpressanordnung und einem mit der Drehmomentübertragungseinrichtung ausgestatteten Antriebsstrang rotiert. Der eine im Wesentlichen isotropen Massenverteilung aufweisende Anpresskörper kann aufgrund von Fertigungstoleranzen eine Anisotropie von bis zirka ein Prozent aufweisen. Die Anisotropie ist hier eine prozentuale Massenträgheitsdifferenz der Massenträgheit in der x- beziehungsweise y-Achse durch den Massenschwerpunkt zueinander. Die Massenträgheiten um die radialen Rotationsachsen x beziehungsweise y des mindestens einen starr mit dem Anpresskörper verbundenen Einzelteils liegen bezüglich ihres Betrages in einer Größenordnung von dreißig bis sechzig Prozent der Massenträgheiten des mit ihr verbundenen Anpresskörpers. Hat nun dieses Einzelteil eine Anisotropie von ungefähr fünfzehn bis siebzehn Prozent, so ergibt sich für die Drehmomentübertragungseinrichtung, die auch als Baugruppe bezeichnet werden kann, eine Anisotropie von vier bis fünf Prozent. Diese Anisotropie von vier bis fünf Prozent reicht, vorteilhaft mit zusätzlichen Maßnahmen, wie einer exzentrisch bearbeiteten oder glatten Reiboberfläche, aus, um eine unerwünschte Geräuschentwicklung im Betrieb der Drehmomentübertragungseinrichtung deutlich zu reduzieren. Sollte eine Anisotropie der Drehmomentübertragungseinrichtung von zehn Prozent angestrebt werden und die Massenträgheit des Einzelteils um seine x- beziehungsweise y-Achse in der ähnlichen Größenordnung wie des Anpresskörpers selbst liegen, sollte vorteilhaft ein Anisotropie von zirka zehn bis fünfundzwanzig Prozent an dem Einzelteil realisiert werden. Die zusätzlichen Maßnahmen umfassen zum Beispiel mindestens eine exzentrische Rille in einer Reibfläche des Reibelements. Ein solches als Reibplatte ausgeführtes Reibelement ist zum Beispiel in der noch nicht offengelegten deutschen Patentanmeldung DE 10 2018 100 803 offenbart. Die zusätzlichen Maßnahmen umfassen alternativ oder zusätzlich die Verwendung eines radial weichen Dämpfers.

Ein weiteres bevorzugtes Ausführungsbeispiel der Drehmomentübertragungseinrichtung ist dadurch gekennzeichnet, dass die anisotrope Massenverteilung der Anpressanordnung kleiner als zehn Prozent ist. Die anisotrope Massenverteilung der Anpressanordnung liegt insbesondere zwischen vier und fünf Prozent. Die nahezu isotrope Anpressplatte kann aufgrund von Fertigungstoleranzen eine Anisotropie von bis circa ein Prozent aufweisen. Die Anisotropie ist hier prozentuale Massenträgheitsdifferenz der Massenträgheiten der x- beziehungsweise y-Achse, insbesondere der beiden Radialachsen, durch den Massenschwerpunkt zueinander. Die Massenträgheiten um die radialen Rotationsachsen x beziehungsweise y des Zusatzteils liegen bezüglich ihres Betrages in einer Größenordnung von dreißig bis sechzig Prozent der Massenträgheiten der mit ihr verbundenen Anpressplatte. Hat nun dieses Zusatzteil eine Anisotropie von ungefähr fünfzehn bis siebzehn Prozent, ergibt sich für die Baugruppe Anpressplatte+Vernietung+Zusatzteil eine Anisotropie von circa vier bis fünf Prozent. Die Anisotropie von vier bis fünf Prozent reicht in Kombination mit zusätzlichen Maßnahmen wie einer exzentrisch bearbeiteten oder glatten Reiboberfläche aus.

Ein weiteres bevorzugtes Ausführungsbeispiel der Drehmomentübertragungseinrichtung ist dadurch gekennzeichnet, dass das starr mit dem Anpresskörper verbundene Einzelteil eine zusätzliche Funktion in der Anpressanordnung ausübt, insbesondere ein Zuganker ist. Das Einzelteil übt also eine Doppelfunktion aus. Zum einen dient das Einzelteil dazu, die anisotrope Massenverteilung der Anpressanordnung darzustellen. Darüber hinaus dient das Einzelteil zum Beispiel zur Übertragung der Anpresskraft zwischen dem Anpresskörper und einem weiteren Bauteil der Anpressanordnung beziehungsweise Drehmomentübertragungseinrichtung.

Die Drehmomentübertragung des zum Beispiel als Anpressplatte ausgeführten Anpresskörpers wird zum Beispiel mit Hilfe von Blattfedern realisiert. Die Blattfedern ermöglichen die Übertragung eines Drehmoments, bei gleichzeitiger Zulassung einer axialen Bewegung zwischen dem Anpresskörper und dem Gegenkörper beziehungsweise eines mit dem Gegenkörper verbundenen Teils. Bei dem Teil handelt es sich zum Beispiel um einen Mitnehmerring, der zur Darstellung einer kraftübertragenden Verbindung mit einem weiteren Bauteil der Anpressanordnung, zum Beispiel mit einer Zentralplatte einer Doppelkupplung, verbunden ist. Bei der bevorzugten Ausführung des Einzelteils als Zuganker dient das Einzelteil vorteilhaft zur Übertragung einer axialen Betätigungskraft von einer Betätigungsvorrichtung, die zum Beispiel eine Hebelfeder umfasst, auf den Anpresskörper.

Ein weiteres bevorzugtes Ausführungsbeispiel der Drehmomentübertragungseinrichtung ist dadurch gekennzeichnet, dass das starr mit dem Anpresskörper verbundene Einzelteil eine Verbindungseinrichtung ist, die der Anpresskörper mit mindestens einem weiteren Funktionsteil der Anpressanordnung starr verbindet, wobei die Verbindungseinrichtung und/oder das weitere Funktionsteil eine anisotrope Massenverteilung aufweisen/aufweist. Das Einzelteil ist beziehungsweise umfasst zum Beispiel ein den Anpresskörper vollständig umschließender Mitnehmerring, der zur Darstellung einer kraftübertragenden Verbindung mit einem weiteren Bauteil, wie einer Zentralplatte oder einem Zuganker, dient.

Ein weiteres bevorzugtes Ausführungsbeispiel der Drehmomentübertragungseinrichtung ist dadurch gekennzeichnet, dass das starr mit dem Anpresskörper verbundene Einzelteil ausschließlich dazu dient, die anisotrope Massenverteilung der Anpressanordnung darzustellen. Zur Darstellung der anisotropen Massenverteilung weist das starr mit dem Anpresskörper verbundene Einzelteil zum Beispiel diametrale Masseverringerungen und/oder Masseerhöhungen auf. Die Masseerhöhungen können zum Beispiel durch Massekörper, wie Masselappen, oder durch Nietkörper realisiert werden, die starr mit dem Einzelteil verbunden sind. Die Masseverringerung wird zum Beispiel durch Löcher oder Ausnehmungen beziehungsweise Aussparungen in dem Einzelteil realisiert.

Ein weiteres bevorzugtes Ausführungsbeispiel der Drehmomentübertragungseinrichtung ist dadurch gekennzeichnet, dass das starr mit dem Anpresskörper verbundene Einzelteil diametrale Masseverringerungen und/oder Masseerhöhungen aufweist, um die anisotrope Massenverteilung der Anpressanordnung darzustellen.

Ein weiteres bevorzugtes Ausführungsbeispiel der Drehmomentübertragungseinrichtung ist dadurch gekennzeichnet, dass eine einzelne Kontaktfläche zwischen dem Anpresskörper und dem mindestens einen Einzelteil kleiner als eintausend Quadratmillimeter ist. Dadurch wird vorteilhaft erreicht, dass kein oder nur ein geringer Wärmeübergang zwischen dem Anpresskörper und dem Einzelteil stattfindet, wenn sich der Anpresskörper im Betrieb der Anpressanordnung erwärmt. Die einzelne Kontaktfläche ist zum Beispiel an einer lokalen Erhöhung des Anpresskörpers vorgesehen, über welche der Anpresskörper Kontakt mit einem Verbindungselement hat, das zum Beispiel auch der Anbindung von Blattfederelementen dienen kann. Zur Darstellung einer stabilen Verbindung zwischen dem Anpresskörper und dem mindestens einen Einzelteil dienen zum Beispiel drei einzelne Kontaktflächen. Die Summe der einzelnen Kontaktflächen ist vorteilhaft kleiner als dreitausend Quadratmillimeter.

Ein weiteres bevorzugtes Ausführungsbeispiel der Drehmomentübertragungseinrichtung ist dadurch gekennzeichnet, dass mindestens ein Einzelteil vorteilhaft an einer Befestigungsstelle des Anpresskörpers befestigt ist, die zur Befestigung eines Funktionsteils der Anpressanordnung dient. Dadurch werden der Konstruktionsaufwand und der Fertigungsaufwand reduziert.

Die Erfindung betrifft des Weiteren eine Anpressanordnung, einen Anpresskörper, ein Reibelement, einen Gegenkörper und/oder ein starr mit dem Anpresskörper verbundenes Einzelteil, insbesondere einen Zuganker, für eine vorab beschriebene Drehmomentübertragungseinrichtung. Die genannten Teile sind separat handelbar.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine Drehmomentübertragungseinrichtung mit einer Anpressanordnung, die einen Anpresskörper zum Verpressen eines Reibelements zwischen dem Anpresskörper und einem Gegenkörper umfasst im Schnitt;
Figur 2 den Anpresskörper aus Figur 1 alleine in der Draufsicht;
Figur 3 eine perspektivische Darstellung des Anpresskörpers aus Figur 2;
Figur 4 eine perspektivische Darstellung des Anpresskörpers aus Figur 3 mit einem daran starr befestigten Einzelteil, das als Zuganker ausgeführt ist;
Figur 5 den Anpresskörper mit dem Zuganker aus Figur 4 in der Draufsicht; die
Figuren 6 bis 13 Schnittdarstellungen eines Anpresskörpers zur Veranschaulichung verschiedener Maßnahmen zur Darstellung einer anisotropen Massenverteilung;
Figur 14 eine perspektivische Darstellung des Anpresskörpers mit dem Zuganker und einem zusätzlichen Einzelteil zur Darstellung der anisotropen Massenverteilung;
Figur 15 die Anpressanordnung aus Figur 14 in der Draufsicht;
Figur 16 die Anpressanordnung aus Figur 14 in einer anderen Perspektive;
Figur 17 die Anordnung aus Figur 14 in der Untersicht;
Figur 18 den Anpresskörper mit einem Zuganker, der eine anisotrope Massenverteilung aufweist;
Figur 19 eine perspektivische Darstellung eines Teils der Anpressanordnung aus Figur 1;
Figur 20 die Drehmomentübertragungseinrichtung aus Figur 1 in einer Seitenansicht von rechts; die
Figuren 21 bis 24 verschiedene perspektivische Darstellungen der Drehmomentübertragungseinrichtung aus Figur 1 ;
Figur 25 eine vereinfachte Darstellung eines zweiten Anpresskörpers der Drehmomentübertragungseinrichtung aus Figur 1 mit einem starr daran befestigten Einzelteil zur Darstellung der anisotropen Massenverteilung;
Figur 26 den Anpresskörper mit dem Einzelteil aus Figur 25 in der Draufsicht; und
Figur 27 eine perspektivische Darstellung des Anpresskörpers mit dem Einzelteil aus den Figuren 25 und 26.

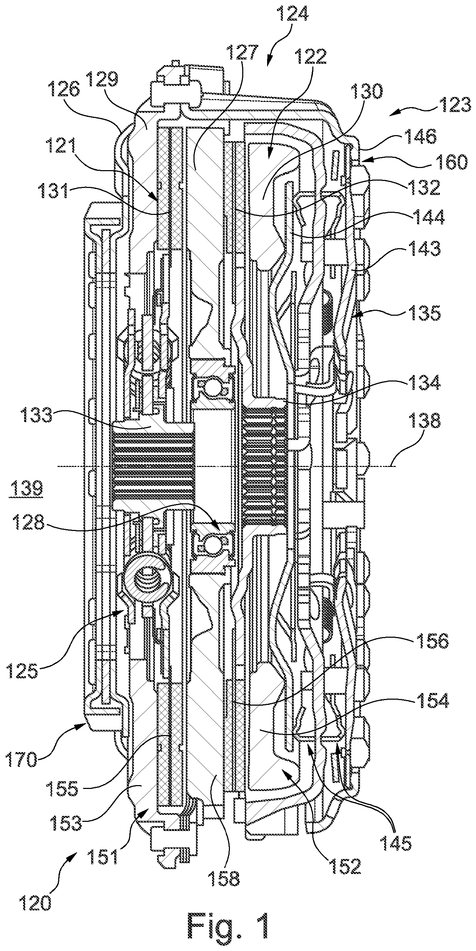

In Figur 1 ist ein Antriebsstrang 120 mit einer Drehmomentübertragungseinrichtung 123 im Schnitt dargestellt. Bei der Drehmomentübertragungseinrichtung 123 handelt es sich um ein Kupplungsaggregat mit einer Doppelkupplung 124 in einem Doppelkupplungsgetriebe des Antriebsstrangs 120. Die Doppelkupplung 124 umfasst zwei Kupplungen 121, 122, die auch als Teilkupplungen 121, 122 bezeichnet werden. Die Kupplung 121 wird auch als K1 Kupplung bezeichnet. Die Kupplung 122 wird auch als K2 Kupplung bezeichnet.

Über eine Verzahnung 170 ist die Drehmomentübertragungseinrichtung 123 antriebsmäßig mit einem Antrieb, zum Beispiel mit einer Kurbelwelle einer Brennkraftmaschine, die nur durch ein Bezugszeichen 139 in Figur 1 angedeutet ist, verbunden. Ein Ausgangsteil ist zum Beispiel über eine Drehschwingungsdämpfungseinrichtung 125 mit einem Abtrieb verbunden.

Das Eingangsteil der Drehmomentübertragungseinrichtung 123 ist über einen Kupplungsdeckel 126 drehfest mit einer Zentralplatte 127 verbunden. Die Zentralplatte 127 ist mit Hilfe eine Stützlagers 128 um eine Drehachse 138 drehbar. In einer Axialrichtung ist die Zentralplatte 127 zwischen einer Anpressplatte 129 der Kupplung 121 und einer Anpressplatte 130 der Kupplung 122 angeordnet. Der Begriff axial bezieht sich auf die Drehachse 138 der Zentralplatte 127. Axial bedeutet in Richtung oder parallel zur Drehachse138 der Zentralplatte 127.

Eine Kupplungsscheibe 131 der Kupplung 121 ist zur Drehmomentübertragung zwischen der Zentralplatte 127 und der Anpressplatte 129 einklemmbar. Eine Kupplungsscheibe 132 ist zur Drehmomentübertragung zwischen der Zentralplatte 127 und der Anpressplatte 130 einklemmbar. Die Kupplungsscheibe 131 ist drehfest mit einer Getriebeeingangswelle verbunden, in die eine Wellennabe 133 eingreift. Die Kupplungsscheibe 132 ist drehfest mit einer als Hohlwelle ausgeführten Getriebeeingangswelle verbunden, in die eine Wellennabe 134 eingreift.

Die Doppelkupplung 124 wird über eine Betätigungsvorrichtung 135 betätigt. Die Betätigungsvorrichtung 135 umfasst zwei Hebelfedern 143, 144. Mit Hilfe der Hebelfeder 144 wird die Anpressplatte 130 betätigt, das heißt in axialer Richtung relativ zu der Zentralplatte 127 verlagert. Die Hebelfeder 143 ist über einen Zuganker 146 betätigungsmäßig mit der Anpressplatte 129 gekoppelt. Zwischen den beiden Hebelfedern 143, 144 ist eine Hebelfederauflage 145 angeordnet, an der sich die beiden Hebelfedern 143, 144 indirekt abstützen.

Die Zentralplatte 127 der Doppelkupplung 124 stellt einen Gegenkörper 158 von zwei Anpressanordnungen 151, 152 dar. In der Anpressanordnung 151 stellt die Anpressplatte 129 einen Anpresskörper 153 dar. Die Kupplungsscheibe 131 stellt in der Anpressanordnung 151 ein Reibelement 155 dar. Die Anpressplatte 130 stellt in der Anpressanordnung 152 einen Anpresskörper 154 dar. Die Kupplungsscheibe 132 stellt in der Anpressanordnung 152 ein Reibelement 156 dar.

Bei Kupplungen und Mehrfachkupplungen kann es in einem Schlupfbetrieb zu einer hochfrequenten Geräuschentwicklung kommen, die auch als Kreischen oder Eeken bekannt ist. Dabei Koppeln Kippmoden der Anpressplatten mit Radialmoden der Getriebewelle. Durch diese Kopplung kommt es zu einem Aufschwingen, was letztendlich Ursache für die hochfrequente Geräuschentwicklung ist.

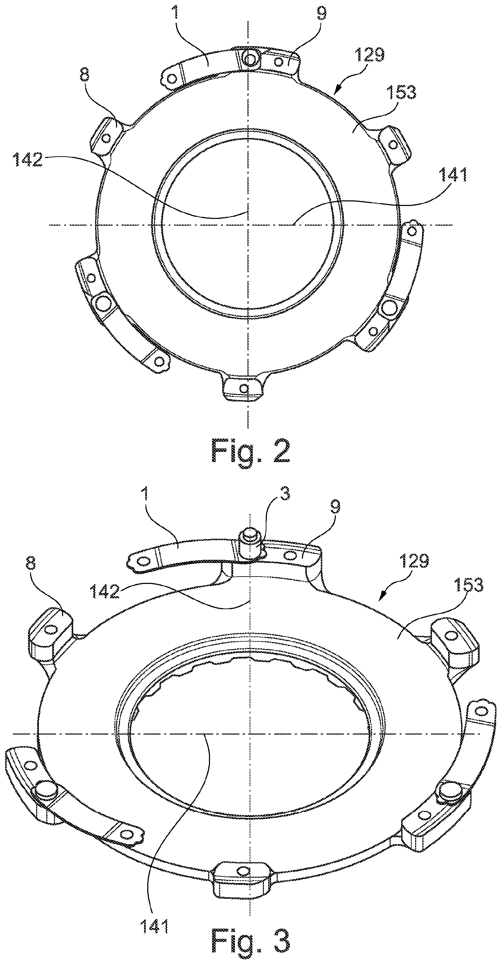

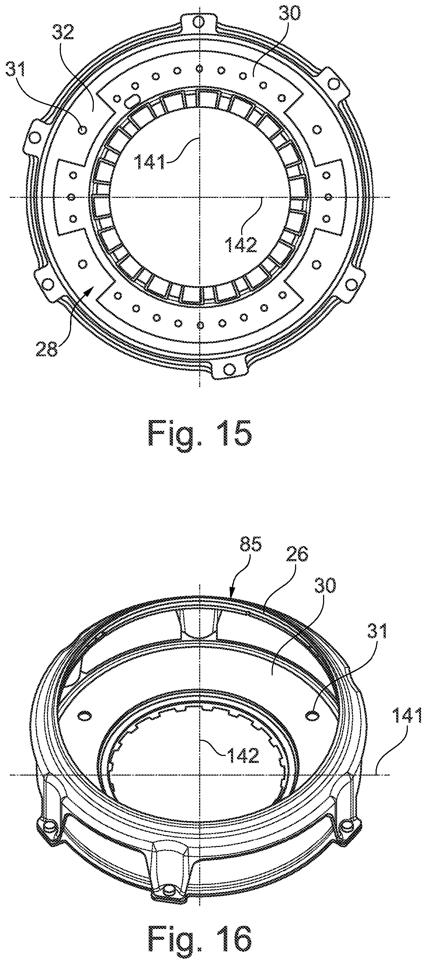

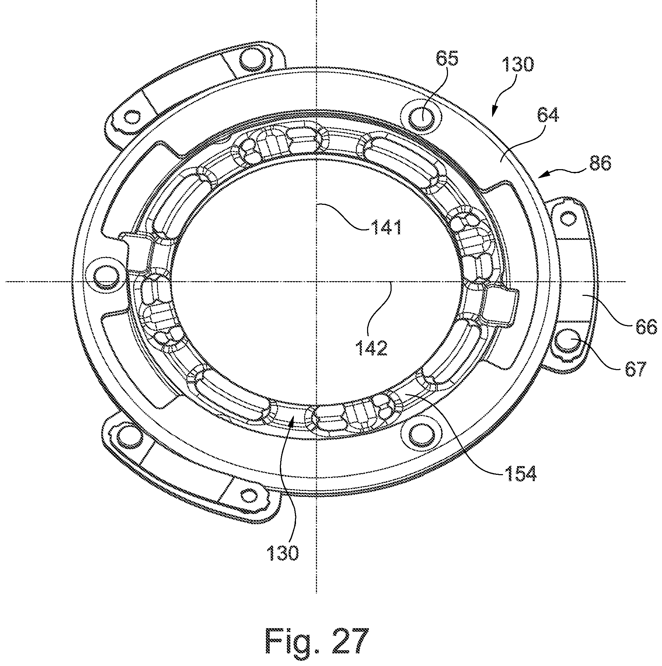

Die Anpressanordnung 151; 152 der Drehmomentübertragungseinrichtung 123 ist, wie man in den Figuren 2 bis 4, 14 bis 20 und 26, 27 sieht, mit unterschiedlichen Massenträgheitsmomenten über eine erste Radialachse 141 und eine zweite Radialachse 142, die als senkrecht zur ersten Radialachse 141 stehende Kippachse ausgeführt ist, ausgestattet. Die unterschiedlichen Massenträgheitsmomente über die beiden Radialachsen 141, 142 werden vorteilhaft nicht durch unterschiedliche Massenträgheitsmomente des Anpresskörpers 153, 154 realisiert, sondern durch außerhalb des Anpresskörpers 153, 154 angeordnet und thermisch von diesem entkoppelte Einzelteile 160; 81; 82; 83; 84; 85; 86. Die Anpresskörper 153, 154 haben in axialer Richtung betrachtet über ihren kompletten Umfang eine nahezu gleiche Massenverteilung.

In den Figuren 2 und 3 ist der Anpresskörper 153 alleine in verschiedenen Ansichten dargestellt. Der Anpresskörper 153 hat im Wesentlichen die Gestalt eines Ringkörpers. Radial außen weist der Anpresskörper 153 insgesamt sechs Anbindungsbereiche 8, 9 zur starren Befestigung des Zugankers (146 in Figur 1) auf. Der Anbindungsbereich 8 dient alleine zur starren Verbindung mit dem Zuganker.

Der Anbindungsbereich 9 dient zum einen zur starren Verbindung mit dem Zuganker. Zum anderen dient der Anbindungsbereich 9 zur Befestigung von Blattfedern 1. Die Blattfedern 1 dienen dazu, den Anpresskörper 153 drehfest mit dem Gegenkörper (158 in Figur 1) der Doppelkupplung zu verbinden. Die Blattfedern 1 ermöglichen eine axiale Bewegung des Anpresskörpers 153 relativ zu dem Gegenkörper 158, wenn die Kupplung betätigt wird.

In Figur 3 sieht man, dass ein Ende der Blattfeder 1 mit Hilfe eines Nietelements 3 in dem Anbindungsbereich 9 an dem Anpresskörper 153 befestigt ist. Das Nietelement 3 stellt eine Zusatzmasse dar, mit der die Massenverteilung der Anpressanordnung (151 in Figur 1) gezielt beeinflusst werden kann. Das Nietelement 3 ist auf der zweiten Radialachse 142 angeordnet. Das Nietelement 3 hat also eine Doppelfunktion. Zum einen dient es zur Befestigung der Blattfeder 1 an dem Anpresskörper 153. Darüber hinaus kann mit Hilfe von mehreren Nietelementen 3 die Massenverteilung der Anpressanordnung (151 in Figur 1) gezielt eingestellt werden.

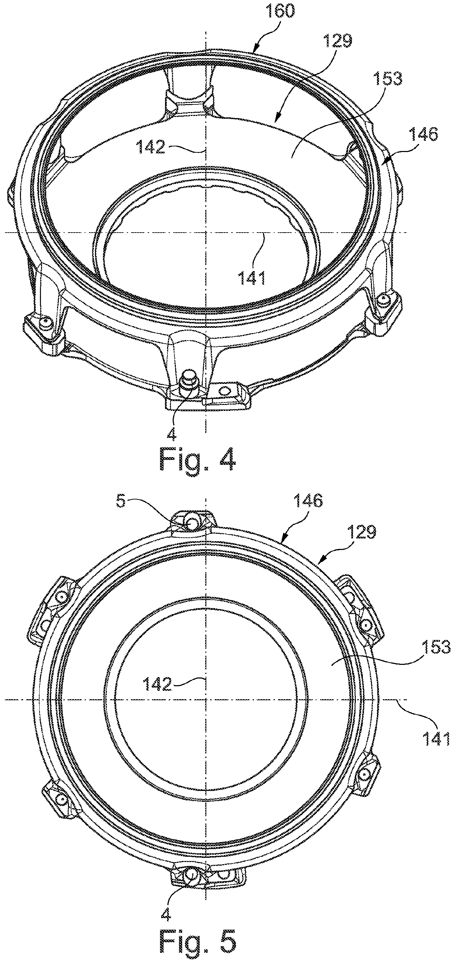

In den Figuren 4 und 5 sieht man, wie der Zuganker 146 mit Hilfe von Nietelementen 4, 5 starr mit dem Anpresskörper 153 verbunden ist. Die Nietelemente 4, 5 haben ebenfalls eine Doppelfunktion. Sie dienen zum einen dazu, den Zuganker 146 starr mit dem Anpresskörper 153 zu verbinden. Darüber hinaus stellen die Nietelemente 4, 5 Zusatzmassen dar, mit denen die Massenverteilung der Anpressanordnung (151 in Figur 1) gezielt eingestellt werden kann.

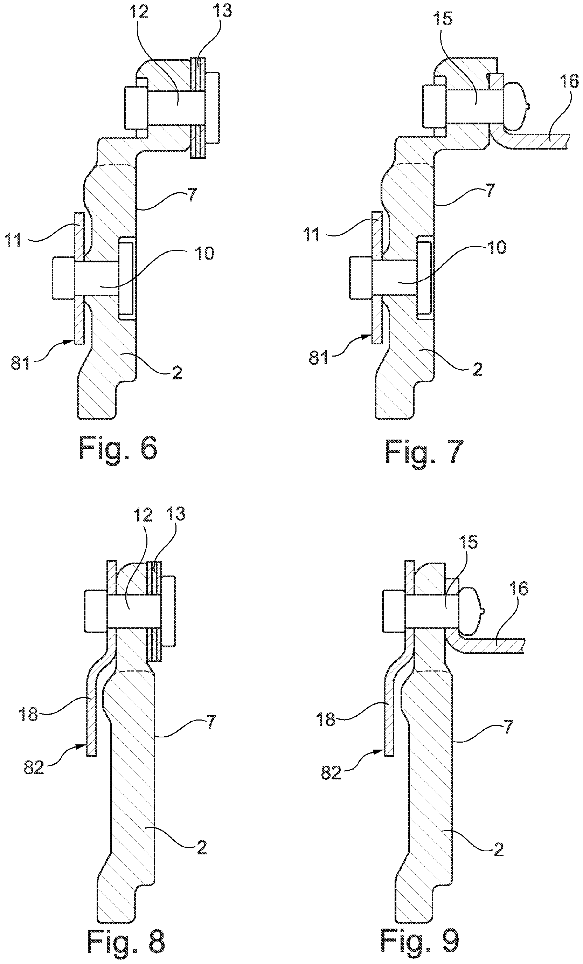

In den Figuren 6 bis 9 ist ein Anpresskörper 2 gemäß vier verschiedenen Ausführungsbeispielen vereinfacht im Schnitt dargestellt. Der Anpresskörper 2 weist in den Figuren 6 bis 9 rechts eine Reibfläche 7 auf. Die Reibfläche 7 kommt im Betrieb des Anpresskörpers 2 mit einem Reibelement (155 in Figur 1) in Kontakt, wenn die zugehörige Kupplung betätigt wird. Die dabei entstehende Reibungswärme soll möglichst nicht oder nur in möglichst geringem Maße auf die mit dem Anpresskörper 2 starr verbundenen Einzelteile 81; 82 übertragen werden.

In Figur 6 ist das Einzelteil 81 als Zusatzbauteil 11 ausgeführt, das mit Hilfe eines Nietelements 10 an dem Anpresskörper 2 befestigt ist. Das Zusatzbauteil 11 kann einteilig oder mehrteilig ausgeführt sein. Mit dem Zusatzbauteil 11 kann die Massenverteilung des Anpresskörpers 2 gezielt eingestellt werden. Zu diesem Zweck ist das Zusatzbauteil 11 zum Beispiel als geschlossener Ringkörper ausgeführt.

An dem geschlossenen Ringkörper können an geeigneten Stellen zum Beispiel Löcher angebracht sein, um die Massenverteilung des Anpresskörpers 2 zu verändern. Darüber hinaus können an dem Zusatzbauteil 11 zum Beispiel Masselappen angebracht sein, um die Massenverteilung des Anpresskörpers 2 einzustellen. Das Zusatzbauteil 11 dient nur dazu, die Massenverteilung des Anpresskörpers 2 zu verändern. Radial außen sind an dem Anpresskörper 2 mit Hilfe von Nietelementen 12 Blattfedern 13 befestigt.

In Figur 7 sieht man, dass mit Hilfe von Nietelementen 15 radial außen an dem Anpresskörper 2 ein Zuganker 16 befestigt ist. Aus einer Zusammenschau der Figuren 6 und 7 ergibt sich, dass das Zusatzbauteil 11 als geschlossener Ringkörper ausgeführt ist. Das Zusatzbauteil 11 hat zum Beispiel im Wesentlichen die Gestalt einer Kreisringscheibe mit Durchgangslöchern zur Befestigung der Nietelemente 10.

In den Figuren 8 und 9 ist dargestellt, dass das Einzelteil 82, das zur Einstellung der Massenverteilung des Anpresskörpers 2 dient, auch als Zusatzbauteil 18 ausgeführt sein kann. Das Zusatzbauteil 18 ist mit Hilfe von Nietverbindungselementen 12, 15 radial außen an dem Anpresskörper 2 befestigt. Das Nietverbindungselement 12 dient, wie man in Figur 8 sieht, zur Befestigung von Blattfedern 13 an dem Anpresskörper 2. Das Nietelement 15 dient, wie man in Figur 9 sieht, zur Befestigung eines Zugankers 16 an dem Anpresskörper 2.

Das Einzelteil 82 in den Figuren 8 und 9 hat den Vorteil, dass bereits vorhandene Anbindungsbereiche an dem Anpresskörper 2 genutzt werden können, um das Zusatzbauteil 18 starr mit dem Anpresskörper 2 zu verbinden. Das Zusatzbauteil 18 erstreckt sich, wie man in Figur 8 sieht, auf der der Reibfläche 7 abgewandten Seite des Anpresskörpers 2 radial nach innen. Dadurch wird eine Überlappung in radialer Richtung zwischen dem Zusatzbauteil 18 und der Reibfläche 7 des Anpresskörpers 2 erreicht.

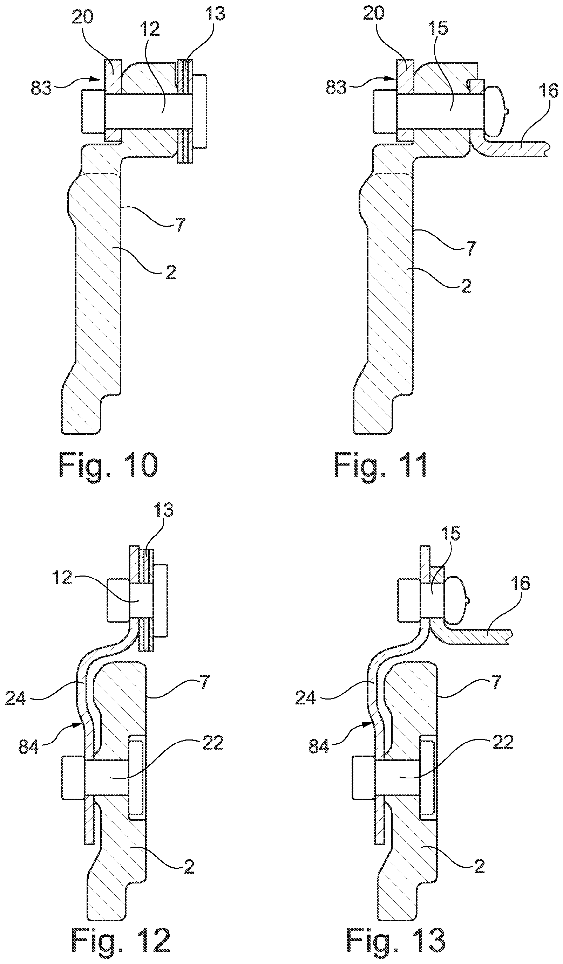

In den Figuren 10 und 11 sieht man, dass ein ähnliches Zusatzbauteil 20 zur Darstellung des Einzelteils 83 auch ohne Überlappung in radialer Richtung mit der Reibfläche 7 des Anpresskörpers 2 starr mit dem Anpresskörper 2 verbunden sein kann. Das Einzelteil 83 beziehungsweise das Zusatzbauteil 20 weist zur gezielten Beeinflussung der Massenverteilung der Anpressanordnung (151 in Figur 1) zum Beispiel über seinen Umfang unterschiedliche Dickenbereiche auf.

In den Figuren 12 und 13 ist das Einzelteil 84 ein Zusatzbauteil 24, das eine Doppelfunktion ausübt. Das Zusatzbauteil 24 ist mit Hilfe von Nietelementen 22 auf der der Reibfläche 7 abgewandten Seite des Anpresskörpers 2 befestigt. Radial außen sind an dem Zusatzbauteil 24 mit Hilfe von Nietelementen 12 Blattfedern 13 befestigt. Die Blattfedern 13 dienen zur Darstellung einer drehfesten Verbindung mit dem Gegenkörper (158 in Figur 1). Darüber hinaus ist an dem Zusatzbauteil 24 radial außen ein Zuganker 16 befestigt. Der Zuganker 16 ist mit Hilfe von Nietelementen 15 starr mit dem Zusatzbauteil 24 verbunden.

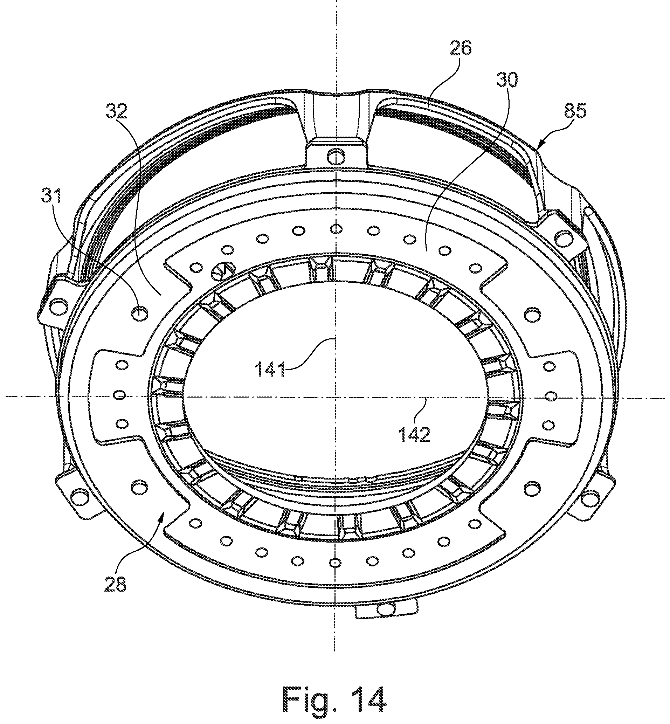

In den Figuren 14 bis 17 ist ein Anpresskörper 30 mit einer im Wesentlichen isotropen Massenverteilung dargestellt. An dem Anpresskörper 30 ist mit Hilfe einer Verbindungseinrichtung 28, insbesondere eines Zwischenteils 28, ein Zuganker 26 befestigt, der zusammen mit der Verbindungseinrichtung 28 das Einzelteil 85 darstellt. Der Zuganker 26 hat vorteilhaft eine im Wesentlichen anisotrope Massenverteilung. Das Zwischenteil 28 ist mit Hilfe von Nietelementen 31 an dem Anpresskörper 30 befestigt. Das Zwischenteil 28 kann alternativ oder zusätzlich zu dem Zuganker 26 eine anisotrope Massenverteilung aufweisen.

Das Zwischenteil 28 weist radial nach innen abstehende Masselappen 32 auf, die Masseerhöhungen darstellen. Mit Hilfe der Masselappen 32 kann eine gewünschte Massenverteilung in der Anpressanordnung (151 in Figur 1) eingestellt werden. Zu diesem Zweck können die Masselappen 32 selbstverständlich auch, anders als in den Figuren 14 bis 17 dargestellt, angeordnet werden. Darüber hinaus können die Masselappen 32 unterschiedlich dick ausgeführt sein, um die gewünschte Massenverteilung darzustellen.

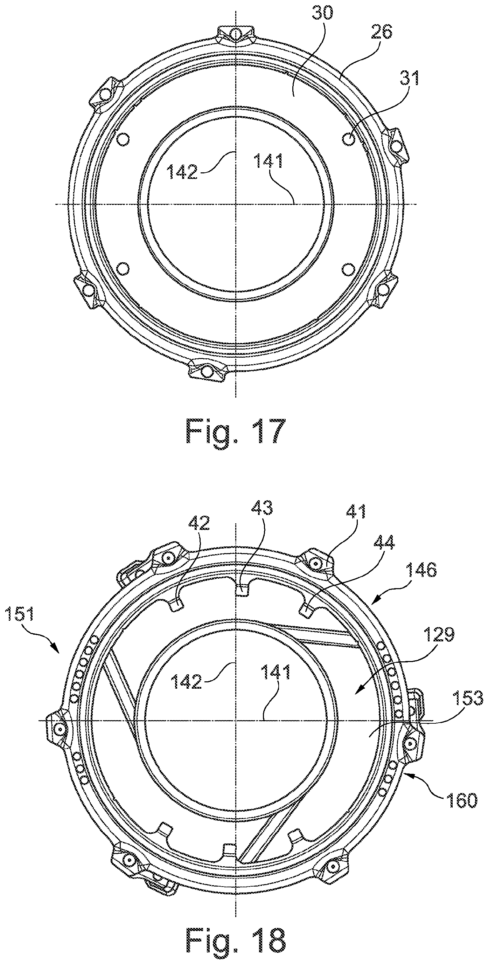

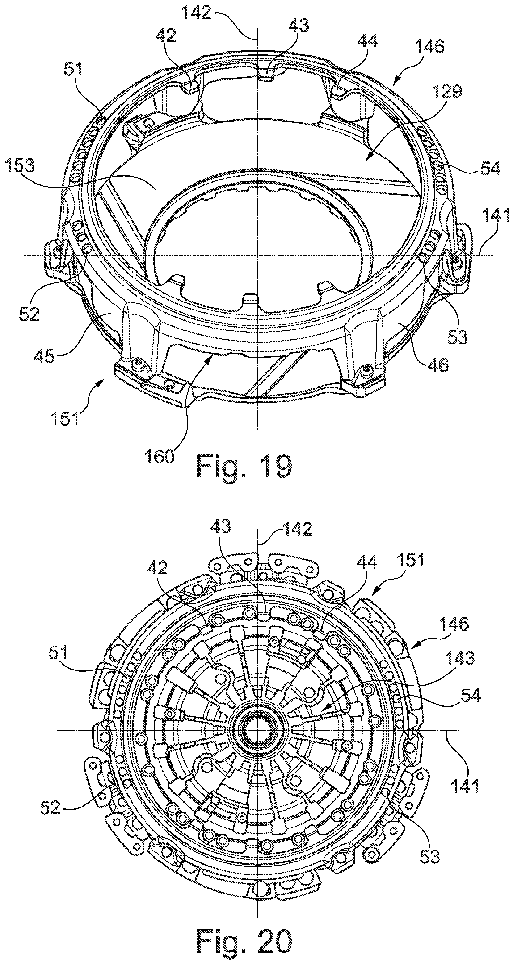

In den Figuren 18 und 19 ist ein besonders bevorzugtes Ausführungsbeispiel dargestellt, wie die Massenverteilung der Anpressanordnung (151 in Figur 1) besonders wirksam verändert beziehungsweise eingestellt werden kann. Der Anpresskörper 153 ist über radial außen angeordnete Fußbereiche 41 starr mit dem Zuganker 146 verbunden. Zur Darstellung der starren Verbindung dienen in den Figuren 19 und 20 nicht näher bezeichnete Nietelemente.

Zur Beeinflussung der Massenverteilung der Anpressanordnung 151 sind an dem Zuganker 146 radial nach innen abstehende Zusatzmassen 42 bis 44 ausgebildet. Beispielhaft sind insgesamt sechs Zusatzmassen im Bereich der zweiten Radialachse 142 angeordnet. Darüber hinaus sind an dem Zuganker 146 Zusatzmassen 45, 46 ausgebildet. Die Zusatzmassen 42 bis 46 sind konstruktiv und fertigungstechnisch mit geringem Aufwand an dem Zuganker 146 realisierbar.

Darüber hinaus weist der Zuganker 146 in einem dem Anpresskörper 153 abgewandten Umfangsrandbereich eine Vielzahl von Löchern 51 bis 54 auf. Über die Löcher 51 bis 54, die gezielte Masseverringerungen darstellen, kann die Massenverteilung der Anpressanordnung 151 alternativ oder zusätzlich zu den Zusatzmassen 42 bis 46 wirksam variiert beziehungsweise eingestellt werden.

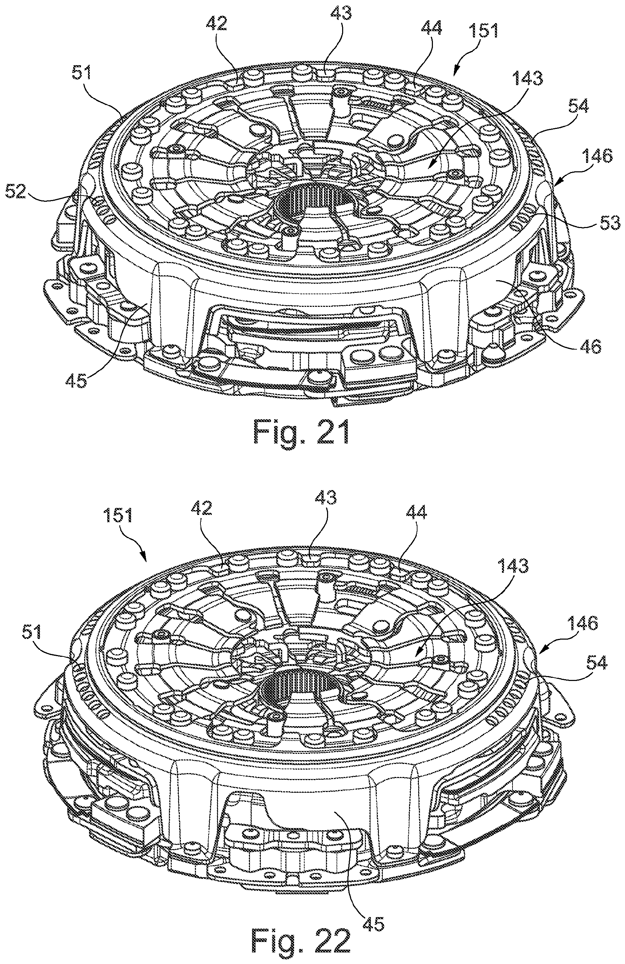

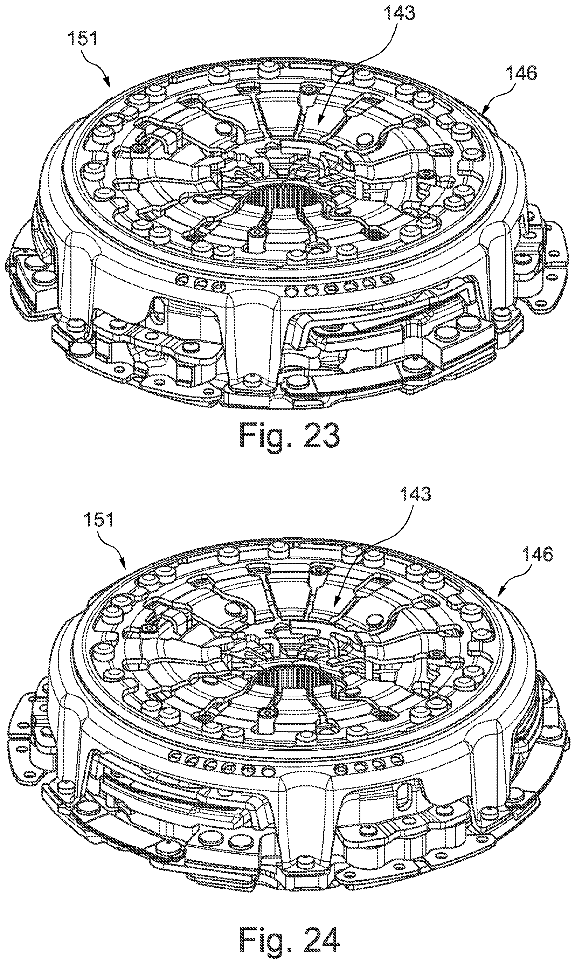

In den Figuren 21 bis 24 ist die Anpressanordnung 151 in verschiedenen Perspektiven im zusammengebauten Zustand dargestellt, um die Maßnahmen zur Beeinflussung der Massenverteilung zu veranschaulichen. Die Zusatzmassen 42 bis 46 dienen zur gezielten Masseerhöhung um die Radialachse 141. Die Löcher 51 bis 54 dienen zur gezielten Massenabsenkung um die Radialachse 142.

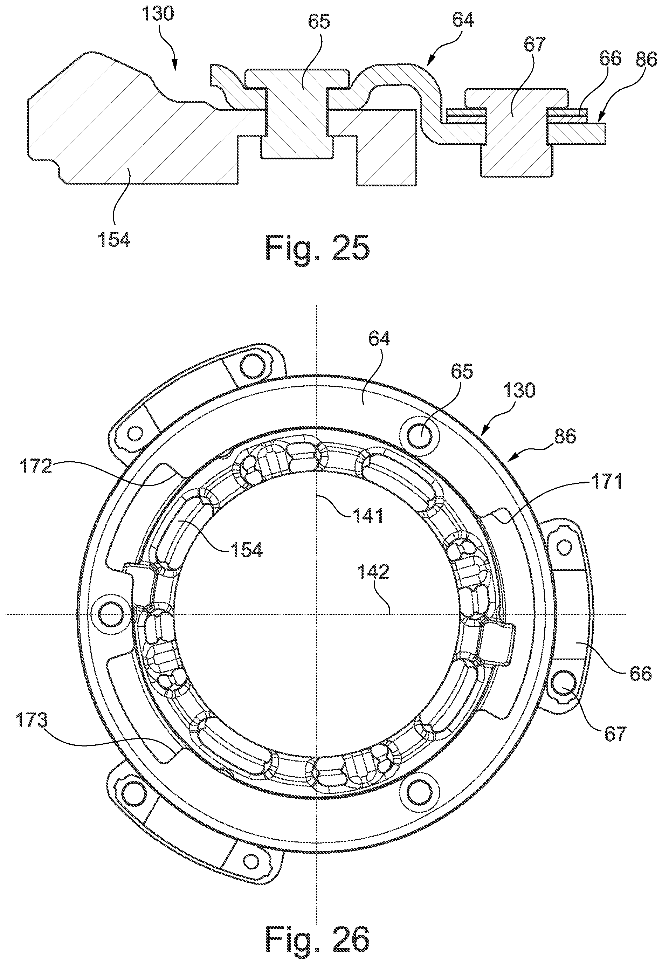

In den Figuren 25 bis 27 ist ein Ausführungsbeispiel dargestellt, wie die Massenverteilung des Anpresskörpers 154 in der Anpressanordnung (152 in Figur 1) wirksam beeinflusst beziehungsweise eingestellt werden kann. Das Einzelteil 86 zur Einstellung beziehungsweise Beeinflussung der Massenverteilung der Anpressanordnung ist ein Zusatzteil 64. Das Zusatzteil 64 ist mit Hilfe von Nietelementen 65 starr mit dem Anpresskörper 154 verbunden. Die Kontaktfläche zwischen Zusatzteil und Anpresskörper ist auch hier zur Verringerung des Wärmeübergangs reduziert.

Über das Zusatzteil 64 kann auf einfache Art und Weise, wie sich aus einer Zusammenschau der Figuren 25 bis 27 ergibt, die Massenverteilung der Anpressanordnung durch gezielte Masseerhöhungen auf der einen Achse und/oder Masseverringerungen 171 bis 173 auf der anderen Achse an dem Zusatzteil 64 eingestellt beziehungsweise variiert werden. Aufgrund des Trägheitsmassenungleichgewichts über die beiden rechtwinklig zueinander angeordneten Achsen wird die Anisotropie realisiert. Dabei übt das Zusatzteil 64 eine Doppelfunktion aus. Radial außen sind an dem Zusatzteil 64 Blattfederelemente 66 angebracht. Die Blattfederelemente 66 sind mit Hilfe von Nietelementen 67 an dem Zusatzteil 64 befestigt. Mit Hilfe der Blattfederelemente 66 wird der Anpresskörper 154 drehfest, aber axial bewegbar, mit dem Gegenkörper (158 in Figur 1) verbunden.

### Bezugszeichenliste

1 Blattfeder
2 Anpresskörper
3 Nietelement
4 Nietelement
5 Nietelement
7 Reibfläche
8 Anbindungsbereich
9 Anbindungsbereich
10 Nietelement
11 Zusatzbauteil
12 Nietelement
13 Blattfeder
15 Nietelement
16 Zuganker
18 Zusatzbauteil
20 Zusatzbauteil
22 Nietelement
24 Zusatzbauteil
26 Zuganker
28 Verbindungseinrichtung, insbesondere Zwischenteil
30 Anpresskörper
31 Nietelement
32 Masseerhöhungen, insbesondere Masselappen
41 Fußbereich
42 Zusatzmasse
43 Zusatzmasse
44 Zusatzmasse
45 Zusatzteil
46 Zusatzteil
51 Masseverringerungen, insbesondere Löcher
52 Masseverringerungen, insbesondere Löcher
53 Masseverringerungen, insbesondere Löcher
54 Masseverringerungen, insbesondere Löcher
64 Zusatzteil
65 Nietelement
66 Blattfederelement
67 Nietelement
81 Einzelteil
82 Einzelteil
83 Einzelteil
84 Einzelteil
85 Einzelteil
86 Einzelteil
120 Antriebsstrang
121 Kupplung
122 Kupplung
123 Drehmomentübertragungseinrichtung
124 Doppelkupplung
125 Drehschwingungsdämpfungseinrichtung
126 Kupplungsdeckel
127 Zentralplatte
128 Stützlager
129 Anpressplatte
130 Anpressplatte
131 Kupplungsscheibe
132 Kupplungsscheibe
133 Wellennabe
134 Wellennabe
135 Betätigungsvorrichtung
138 Drehachse
139 Brennkraftmaschine
141 erste Radialachse
142 zweite Radialachse
143 Hebelfeder
144 Hebelfeder
145 Hebelfederauflage
146 Zuganker
151 Anpressanordnung
152 Anpressanordnung
153 Anpresskörper
154 Anpresskörper
155 Reibelement
156 Reibelement
158 Gegenkörper
160 Einzelteil
170 Verzahnung
171 Masseverringerung
172 Masseverringerung
173 Masseverringerung

## Patentansprüche

1. Drehmomentübertragungseinrichtung (123) mit einer Anpressanordnung (151;152), die einen Anpresskörper (2;30;153;154) zum Verpressen eines Reibelements (155,156) zwischen dem Anpresskörper (2;30;153;154) und einem Gegenkörper (158) umfasst, wobei die Anpressanordnung (151;152) ein bezüglich einer in radialer Richtung durch einen Massenschwerpunkt der Anpressanordnung (151;152) verlaufenden ersten Radialachse (141) erstes Massenträgheitsmoment und ein bezüglich einer in radialer Richtung durch den Massenschwerpunkt der Anpressanordnung (151;152) senkrecht zur ersten Radialachse (141) verlaufenden zweiten Radialachse (142) zweites Massenträgheitsmoment aufweist, das von dem ersten Massenträgheitsmoment verschieden ist, um eine anisotrope Massenverteilung der Anpressanordnung (151;152) darzustellen, **dadurch gekennzeichnet, dass** mindestens ein starr mit dem eine im Wesentlichen isotrope Massenverteilung aufweisenden Anpresskörper (2;30;153;154) verbundenes Einzelteil (81-86;160) eine anisotrope Massenverteilung aufweist, um die anisotrope Massenverteilung der Anpressanordnung (151;152) darzustellen.

2. Drehmomentübertragungseinrichtung nach dem Oberbegriff des Anspruchs 1 **dadurch gekennzeichnet, dass** genau ein starr mit dem eine im Wesentlichen isotrope Massenverteilung aufweisenden Anpresskörper (2;30;153;154) verbundenes Einzelteil (160;81-86) eine anisotrope Massenverteilung aufweist, um die anisotrope Massenverteilung der Anpressanordnung (151;152) darzustellen.

3. Drehmomentübertragungseinrichtung nach einem der vorhergehenden Ansprüche, **dadurch gekennzeichnet, dass** das starr mit dem eine im Wesentlichen isotrope Massenverteilung aufweisenden Anpresskörper (2;30;153;154) verbundene Einzelteil (160;81-86) eine Anisotropie von 10 bis 25 Prozent aufweist.

4. Drehmomentübertragungseinrichtung nach einem der vorhergehenden Ansprüche, **dadurch gekennzeichnet, dass** die anisotrope Massenverteilung der Anpressanordnung (151;152) kleiner als zehn Prozent ist.

5. Drehmomentübertragungseinrichtung nach einem der vorhergehenden Ansprüche, **dadurch gekennzeichnet, dass** das starr mit dem Anpresskörper (2;30;153;154) verbundene Einzelteil (84-86;160) eine zusätzliche Funktion in der Anpressanordnung (151) ausübt, insbesondere ein Zuganker (16;26;146) ist.

6. Drehmomentübertragungseinrichtung nach einem der vorhergehenden Ansprüche, **dadurch gekennzeichnet, dass** das starr mit dem Anpresskörper (2;30;153,154) verbundene Einzelteil (84-86) eine Verbindungseinrichtung (28) ist, die den Anpresskörper (2;30;153,154) mit mindestens einem weiteren Funktionsteil (16;26;66) der Anpressanordnung (151,152) starr verbindet, wobei die Verbindungseinrichtung (28) und/oder das weitere Funktionsteil (16;26;66) eine anisotrope Massenverteilung aufweisen/aufweist.

7. Drehmomentübertragungseinrichtung nach einem der vorhergehenden Ansprüche, **dadurch gekennzeichnet, dass** das starr mit dem Anpresskörper (2) verbundene Einzelteil (81-83) ausschließlich dazu dient, die anisotrope Massenverteilung der Anpressanordnung (151) darzustellen.

8. Drehmomentübertragungseinrichtung nach einem der vorhergehenden Ansprüche, **dadurch gekennzeichnet, dass** das starr mit dem Anpresskörper (153;154) verbundene Einzelteil (160;86) diametrale Masseverringerungen (51-54; 171-173) und/oder Masseerhöhungen (65) aufweist, um die anisotrope Massenverteilung der Anpressanordnung (151;152) darzustellen.

9. Drehmomentübertragungseinrichtung nach einem der vorhergehenden Ansprüche, **dadurch gekennzeichnet, dass** eine einzelne Kontaktfläche zwischen dem Anpresskörper (2;30;153;154) und dem mindestens einen Einzelteil (81-86; 160) kleiner als eintausend Quadratmillimeter ist.

## Claims

1. A torque transmission device (123) having a closing arrangement (151; 152) which has a pressure body (2; 30; 153; 154) for pressing a friction element (155, 156) between the pressure body (2; 30; 153; 154) and a counterbody (158), wherein the closing arrangement (151; 152) has a first mass moment of inertia in respect of a first radial axis (141) running in the radial direction through a centre of gravity of the closing arrangement (151; 152) and a second mass moment of inertia in respect of a second radial axis (142) running in the radial direction through the centre of gravity of the closing arrangement (151; 152) perpendicular to the first radial axis (141), which mass moment of inertia differs from the first mass moment of inertia, to represent an anisotropic mass distribution of the closing arrangement (151; 152), **characterised in that** at least one single part (81-86; 160) rigidly connected to the pressure body (2; 30; 153; 154), which pressure body has a substantially isotropic mass distribution, has an anisotropic mass distribution in order to represent the anisotropic mass distribution of the closing arrangement (151; 152).

2. The torque transmission device according to the preamble of claim 1, **characterised in that** precisely one single part (160; 81-86) rigidly connected to the pressure body (2; 30; 153; 154) having an essentially isotropic mass distribution has an anisotropic mass distribution in order to represent the anisotropic mass distribution of the closing arrangement (151; 152).

3. The torque transmission device according to any one of the preceding claims, **characterised in that** the single part (160; 81-86) rigidly connected to the pressure body (2; 30; 153; 154) having an essentially isotropic mass distribution has an anisotropy of 10 to 25 per cent.

4. The torque transmission device according to any one of the preceding claims, **characterised in that** the anisotropic mass distribution of the closing arrangement (151; 152) is less than ten per cent.

5. The torque transmission device according to any one of the preceding claims, **characterised in that** the single part (84-86; 160) rigidly connected to the pressure body (2; 30; 153; 154) performs an additional function in the closing arrangement (151), in particular is a tie rod (16; 26; 146).

6. The torque transmission device according to any one of the preceding claims, **characterised in that** the single part (84-86) rigidly connected to the pressure body (2; 30; 153, 154) is a connecting device (28) that rigidly connects the pressure body (2; 30; 153, 154) to at least one further functional part (16; 26; 66) of the closing arrangement (151, 152), wherein the connecting device (28) and/or the further functional part (16; 26; 66) has/have an anisotropic mass distribution.

7. The torque transmission device according to any one of the preceding claims, **characterised in that** the single part (81-83) rigidly connected to the pressure body (2) is used exclusively to represent the anisotropic mass distribution of the closing arrangement (151).

8. The torque transmission device according to any one of the preceding claims, **characterised in that** the single part (160; 86) rigidly connected to the pressure body (153; 154) has diametrical mass reductions (51-54; 171-173) and/or mass increases (65) in order to represent the anisotropic mass distribution of the closing arrangement (151; 152).

9. The torque transmission device according to any one of the preceding claims, **characterised in that** an individual contact surface between the pressure body (2; 30; 153; 154) and the at least one single part (81-86; 160) is smaller than one thousand square millimetres.

## Revendications

1. Dispositif de transmission de couple (123) comportant un agencement de pression (151 ; 152), lequel comprend un corps de pression (2 ; 30 ; 153 ; 154) permettant de presser un élément de friction (155, 156) entre le corps de pression (2 ; 30 ; 153 ; 154) et un contre-corps (158), dans lequel l'agencement de pression (151 ; 152) présente un premier moment d'inertie de masse par rapport à un premier axe radial (141), s'étendant dans la direction radiale à travers un centre de gravité de l'agencement de pression (151 ; 152) et un second moment d'inertie de masse par rapport à un second axe radial (142), s'étendant dans la direction radiale à travers le centre de gravité de l'agencement de pression (151 ; 152) perpendiculaire au premier axe radial (141), lequel est différent du premier moment d'inertie, afin de représenter une répartition massique anisotrope de l'agencement de pression (151 ; 152), **caractérisé en ce qu'**au moins une pièce individuelle (81-86 ; 160), reliée rigidement au corps de pression (2 ; 30 ; 153 ; 154) présentant une répartition massique essentiellement isotrope, présente une répartition massique anisotrope afin de représenter la répartition massique anisotrope de l'agencement de pression (151 ; 152).

2. Dispositif de transmission de couple selon le préambule de la revendication 1, **caractérisé en ce que** précisément une pièce individuelle (160 ; 81-86), reliée rigidement au corps de pression (2 ; 30 ; 153 ; 154) présentant une répartition massique essentiellement isotrope, présente une répartition massique anisotrope afin de représenter la répartition massique anisotrope de l'agencement de pression (151 ; 152).

3. Dispositif de transmission de couple selon l'une quelconque des revendications précédentes, **caractérisé en ce que** la pièce individuelle (160 ; 81-86), reliée rigidement au corps de pression (2 ; 30 ; 153 ; 154) présentant une répartition massique essentiellement isotrope, présente une anisotropie de 10 à 25 pour cent.

4. Dispositif de transmission de couple selon l'une quelconque des revendications précédentes, **caractérisé en ce que** la répartition massique anisotrope de l'agencement de pression (151 ; 152) est inférieure à dix pour cent.

5. Dispositif de transmission de couple selon l'une quelconque des revendications précédentes, **caractérisé en ce que** la pièce individuelle (84-86 ; 160), reliée rigidement au corps de pression (2 ; 30 ; 153 ; 154), remplit une fonction supplémentaire dans l'agencement de pression (151), en particulier est un tirant (16 ; 26 ; 146).

6. Dispositif de transmission de couple selon l'une quelconque des revendications précédentes, **caractérisé en ce que** la pièce individuelle (84-86), reliée rigidement au corps de pression (2 ; 30 ; 153, 154), est un dispositif de liaison (28), lequel relie rigidement le corps de pression (2 ; 30 ; 153, 154) à au moins une autre pièce fonctionnelle (16 ; 26 ; 66) de l'agencement de pression (151, 152), dans lequel le dispositif de liaison (28) et/ou l'autre pièce fonctionnelle (16 ; 26 ; 66) présentent une répartition massique anisotrope.

7. Dispositif de transmission de couple selon l'une quelconque des revendications précédentes, **caractérisé en ce que** la pièce individuelle (81-83), reliée rigidement au corps de pression (2), sert exclusivement à représenter la répartition massique anisotrope de l'agencement de pression (151).

8. Dispositif de transmission de couple selon l'une quelconque des revendications précédentes, **caractérisé en ce que** la pièce individuelle (160 ; 86), reliée rigidement au corps de pression (153 ; 154), présente des réductions massiques (51-54 ; 171-173) et/ou des augmentations massiques (65) diamétrales afin de représenter la répartition massique anisotrope de l'agencement de pression (151 ; 152).

9. Dispositif de transmission de couple selon l'une quelconque des revendications précédentes, **caractérisé en ce qu'**une surface de contact individuelle entre le corps de pression (2 ; 30 ; 153 ; 154) et l'au moins une pièce individuelle (81-86 ; 160) est inférieure à mille millimètres carrés.
